# EUROPÄISCHE PATENTSCHRIFT

(11) **EP 0 512 219 B1**
(45) Veröffentlichungstag und Bekanntmachung des Hinweises auf die Patenterteilung: **31.01.1996**
(21) Anmeldenummer: 92104230.5
(22) Anmeldetag: 12.03.1992
(51) Int. Cl.: F16D 35/02

(54) **Flüssigkeitsreibungskupplung mit innerer Bimetallabschaltung**
Fluid friction clutch with inner bimetallic control
Embrayage à frottement visqueux avec commande bimétallique interne

(30) Priorität: 10.05.1991 DE 4115299
(43) Veröffentlichungstag der Anmeldung: 11.11.1992
(73) Patentinhaber: Behr GmbH & Co., D-70469 Stuttgart (DE)
(72) Erfinder: Martin, Hans, Dipl.-Ing., W-7000 Stuttgart 1 (DE)
(74) Vertreter: Heumann, Christian

(56) Entgegenhaltungen:
- DE-A- 3 831 832
- FR-A- 2 315 000
- GB-A- 2 174 480

## Beschreibung

Die Erfindung bezieht sich auf eine Flüssigkeitsreibungskupplung nach dem Oberbegriff des Patentanspruches 1, wie sie beispielsweise durch die DE-C-32 46 783 bekannt wurde.

Bei einer derartigen Flüssigkeitsreibungskupplung wird der Ventilhebel, der den Flüssigkeitsstrom von der Vorratskammer in die Arbeitskammer steuert, einerseits von einem außerhalb des Kupplungsgehäuses angeordneten Bimetall (sog. äußeres Bimetall) und andererseits von einem innerhalb der Vorratskammer der Kupplung angeordneten weiteren Bimetall (sog. inneres Bimetall) gesteuert. Letzteres ist an der Trennwand zwischen Vorrats- und Arbeitskammer befestigt und wirkt bei Erreichen einer bestimmten Grenztemperatur in Schließrichtung auf den Ventilhebel ein, so daß dieser die Ventilöffnung verschließt und die Kupplung abregelt. Dadurch wird eine Überhitzung der Flüssigkeit, d.h. des viskosen Silikonöls vermieden. Nachteilig bei dieser Vorrichtung ist, daß die Ventilöffnung - allein durch die Betätigung des inneren Bimetalls - nicht definiert verschlossen wird und die Lüfterdrehzahl damit auf einen unbestimmten Wert abfällt (diese Kupplung neigt daher zum "Sägen").

Aufgabe der vorliegenden Erfindung ist es, einen wirksamen Überhitzungsschutz für die Kupplung und das viskose Medium zu erreichen und dabei die Lüfterdrehzahl auf einen stabilen, definierten, niedrigen Wert einzuregeln.

Gelöst wird diese Aufgabe durch die Merkmale des Patentanspruches 1. Nach der Erfindung ist also für das innere Bimetall eine Wegbegrenzung in Form eines Anschlages vorgesehen, was zur Folge hat, daß der Ventilhebel die Ventilöffnung bei Ansprechen des inneres Bimetalls nicht vollständig verschließt, sondern einen Resthub bzw. Restquerschnitt freiläßt, durch den weiterhin Silikonöl vom Vorratsraum in den Arbeitsraum fließen kann. Dadurch sinkt die Lüfterdrehzahl auf einen stabilen niedrigen Wert ab. Die Höhe der Lüfterdrehzahl kann durch den Anschlag bzw. den verbleibenden Restquerschnitt beliebig eingestellt werden.

Nach dem nebengeordneten Anspruch 2 geht die Erfindung von einer gattungsmäßig abgewandelten Flüssigkeitsreibungskupplung aus, wie sie durch die DE-AS 12 16 036 (dort das Ausführungsbeispiel nach Fig. 7) bekannt wurde. Diese Kupplung besitzt kein äußeres Bimetall, sondern nur ein inneres, das heißt innerhalb der Vorratskammer - es ist also eine sogenannte drehmomentgeregelte Kupplung. Auch hier ist erfindungsgemäß ein Anschlag zur Wegbegrenzung für den Hub des inneren Bimetalls vorgesehen, womit sich dieselben o.g. Vorteile ergeben.

Die Unteransprüche beinhalten vorteilhafte Ausbildungen des Bimetalles in Verbindung mit dem Anschlag.

Nach einer besonderen Ausgestaltung der Erfindung ist das innere Bimetall als Schnappscheibe ausgebildet, welche aus einer konkaven Form in eine konvexe Form umspringt und damit den Ventilhebel "schlagartig" betätigt - allerdings wiederum nur bis zu einem bestimmten Anschlag, der einen Restquerschnitt freiläßt. Durch diese Maßnahme in Form einer Schnappscheibe ist gewährleistet, daß die Regelung durch das innere Bimetall, die ja der Regelung durch das äußere Bimetall überlagert ist, erst relativ spät eingreift, also dann, wenn die kritische Öltemperatur im inneren der Kupplung erreicht ist.

Ausführungsbeispiele der Erfindung sind in der Zeichnung dargestellt und werden im folgenden näher beschrieben.

Es zeigen:
- Fig. 1a und 1b: eine erste Ausführungsvariante,
- Fig. 2a und 2b: eine zweite Ausführungsvariante,
- Fig. 3a und 3b: eine dritte Ausführungsvariante,
- Fig. 4a und 4b: eine vierte Ausführungsvariante für die Anordnung und Ausbildung des inneren Bimetalls, jeweils für eine temperaturgeregelte Kupplung, und
- Fig. 5: eine drehmomentgeregelte Kupplung mit innerem Bimetall.

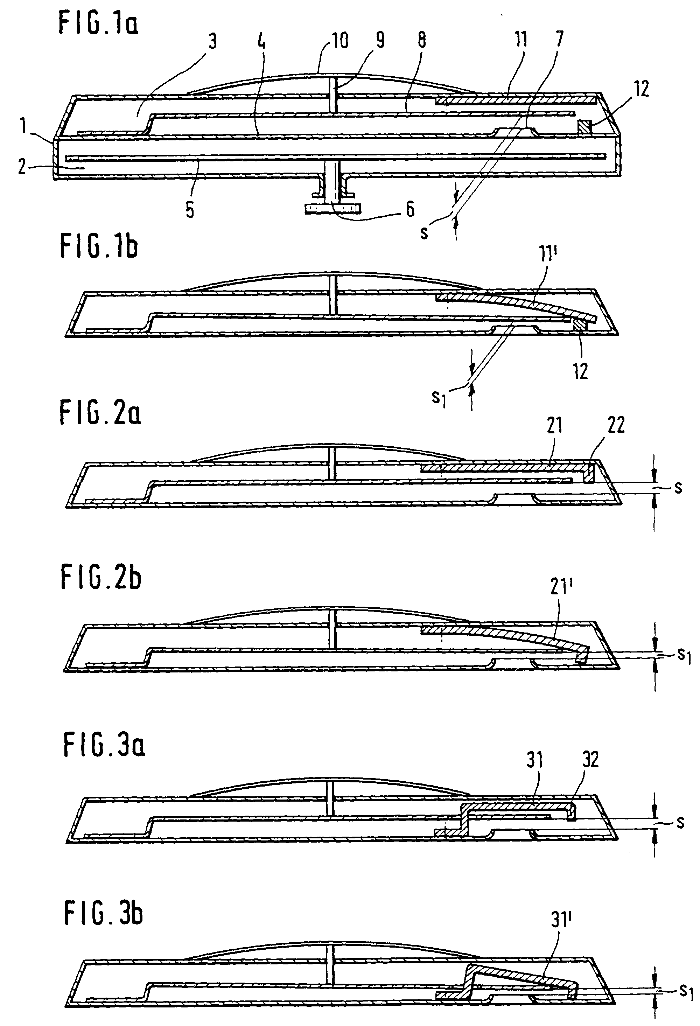

Fig. 1a zeigt schematisch eine Flüssigkeitsreibungskupplung mit einem konventionellen Aufbau, d.h. ein Kupplungsgehäuse 1, welches eine Arbeitskammer 2 aufweist, die durch eine Trennwand 4 von einer Vorratskammer 3 abgeteilt ist. In der Arbeitskammer 2 ist drehbar eine sog. Primärscheibe 5 angeordnet, die drehfest mit einer Antriebswelle 6 verbunden ist. In der Trennwand 4 befindet sich eine Ventilöffnung 7, die über den einen Ventilhebel 8 kontrolliert wird, welcher von einem auf der Außenseite der Kupplung angeordneten Bimetall 10 mittels eines Schaltstiftes 9 betätigt wird. In der Zeichnung nicht dargestellt sind ein Staukörper in der Arbeitskammer und eine Rücklauföffnung in der Trennwand für die Rezirkulation des viskosen Mediums. Insoweit ist diese Flüssigkeitsreibungskupplung bekannt.

Erfindungsgemäß ist nun ein sog. inneres Bimetall 11 vorgesehen, welches an der Innenseite des Kupplungsgehäuses 1 in der Vorratskammer 3 mit einem Ende befestigt ist. Dieses Bimetall 11 ist so ausgelegt, daß es bei Erreichen einer bestimmten Grenztemperatur (ca. 150°C) eine Krümmung erfährt und dadurch mit dem Ventilhebel 8 in Berührung kommt und diesen in Schließrichtung, d.h. in Richtung auf die Ventilöffnung 7 hin bewegt. Diese Schließbewegung erfolgt jedoch nur soweit, bis das freie Ende des Bimetalls 11 den Anschlag 12 erreicht hat. Dann liegt der Ventilhebel 8 mit seinem freien Ende noch nicht auf der Ventilöffnung 7 auf, sondern hat gegenüber dieser noch einen Abstand s1, den sog. Resthub. Sofern nicht von dem äußeren Bimetall 10 eine weitere Bewegung über den Schaltstift 9 auf den Ventilhebel 8 eingeleitet wird, bleibt der Ventilhebel 8 in dieser Stellung stehen, d.h. er läßt noch einen dem Resthub s1 entsprechenden Durchflußquerschnitt frei, durch den weiterhin viskoses Medium (Silikonöl) aus der Vorratskammer 3 in die Arbeitskammer 2 fließen kann, so daß dort weiterhin ein Restdrehmoment übertragen wird, die Abtriebsdrehzahl der Kupplung also nicht völlig absinkt. In an sich bekannter Weise wird dieses in die Arbeitskammer 2 hineinströmende Silikonöl durch eine in der Zeichnung nicht dargestellte Rückpumpeinrichtung (Staukörper) über einen Rücklaufkanal in die Vorratskammer 3 zurückgefördert, so daß eine ständige Zirkulation aufrechterhalten wird.

In Fig. 2a und 2b ist eine weitere Ausführungsvariante der Erfindung dargestellt, wobei das abgeänderte Bimetall mit 21 und der Anschlag mit 22 bezeichnet sind. Aus der Zeichnung ist also erkennbar, daß der Anschlag 22 mit dem Bimetall 21 verbunden ist, indem er als Winkel am Ende des Bimetalles 21 ausgebildet ist. Insofern arbeitet diese Bimetallvariante 21/22 in derselben Weise, wie für Fig. 1a und 1b beschrieben.

In Fig. 3a und 3b ist eine weitere Bimetallvariante 31/32 dargestellt, wobei das eine Ende des Bimetalls 31 an der Trennwand befestigt ist und das Bimetall durch eine entsprechende Öffnung im Ventilhebel auf dessen Oberseite hindurchragt. Bei Ansprechen des Bimetalles 31 verformt sich dieses gemäß der in Fig. 3b dargestellten Weise, so daß der Ventilhebel wiederum in Schließrichtung bewegt wird, jedoch den Resthub s1 freiläßt.

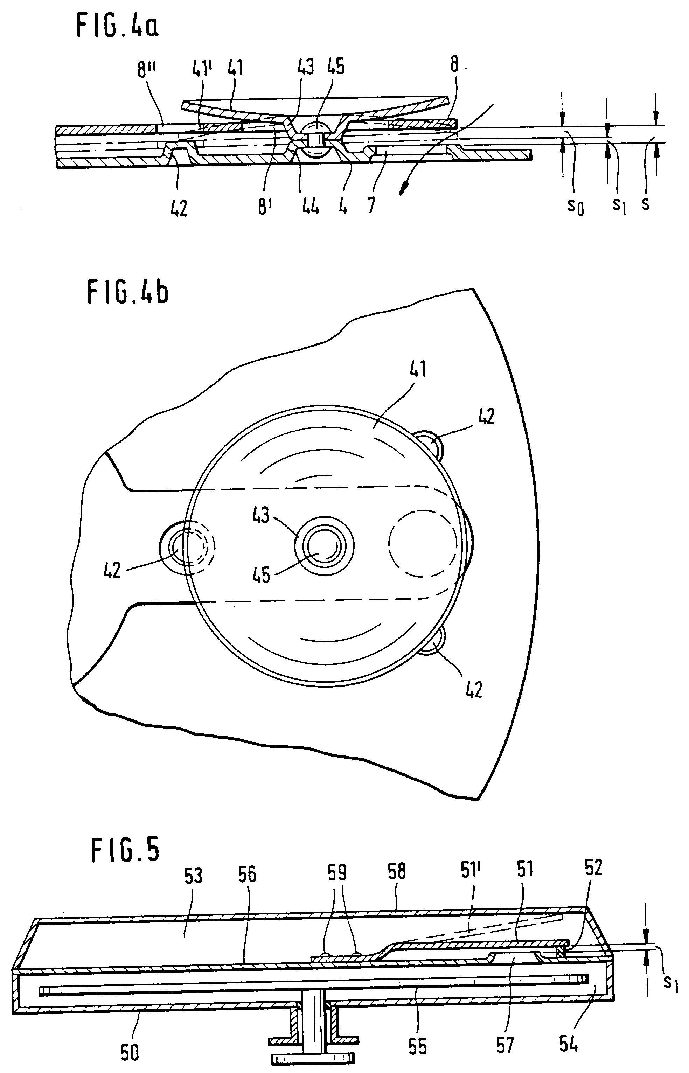

Schließlich ist in Fig.4a und 4b eine letzte Variante für das Bimetall dargestellt, welches hier als tellerförmige Schnappscheibe 41 ausgebildet ist. Diese Bimetall-Schnappscheibe ist im Zustand unterhalb der Ansprechtemperatur leicht konkav ausgebildet, so wie es in der Zeichnung in ausgezogenen Linien dargestellt ist. In der Mitte weist die Schnappscheibe 41 eine zentrale Auskröpfung 43 auf, mit der die Schnappscheibe 41 auf einer korrespondierenden Auskröpfung 44 der Trennwand 4 aufliegt - Bimetallscheibe 41 und Trennwand 4 sind im Bereich der beiden Auskröpfungen 43 und 44 durch einen Niet 45 miteinander verbunden. Die Bimetallscheibe 41 ragt mit ihrer Auskröpfung durch eine größere Öffnung 8' in dem Ventilhebel 8 durch diesen hindurch, so daß sich dieser ungehindert gegenüber der Bimetallscheibe 41 in deren Ruhezustand bewegen kann. Auf der Trennwand sind ferner weitere Ausprägungen 42, vorzugsweise 3 im Winkel von etwa 120° zueinander angeordnet, und zwar etwa innerhalb des Bereiches des äußeren Durchmessers der Schnappscheibe 41. Der Ventilhebel 8 weist eine weitere Ausnehmung 8'' auf, die es erlaubt, daß die in diesem Bereich angeordnete Auskröpfung 42 durch den Ventilhebel 8 hindurchtreten kann, wenn dieser in Schließrichtung bewegt wird.

Die Funktion dieser Bimetall-Schnappscheibe erfolgt in ähnlicher Weise, wie bei den oben beschriebenen Ausführungsbeispielen: Zunächst wird der Ventilhebel 8 in bekannter Weise durch das äußere Bimetall gesteuert und gibt somit die Ventilöffnung 7 mehr oder weniger frei, wobei insgesamt ein Ventilhub s zur Verfügung steht. Bei Erreichen einer bestimmten Grenztemperatur (ca 150°C) im Inneren der Kupplung spricht die Bimetallscheibe 41 an und verformt sich aus ihrer konkaven Ausgangsstellung "schlagartig" bzw. in Form einer Schnappbewegung in die gestrichelt dargestellte konvexe Gestalt. Dabei drückt die Schnappscheibe 41 schlagartig auf den Ventilhebel 8 und bewegt diesen in Schließrichtung, bis die Schnappscheibe mit ihrem äußeren Umfang auf den Anschlägen 42 zu liegen kommt - damit ist ihre Bewegung begrenzt - und ebenso die des Ventilhebels 8, der also nur den Teilhub sO zurücklegt und dann in der gestrichelt dargestellten Stellung verharrt, d.h. einen Resthub von s1 freiläßt. Durch den diesem Resthub s1 entsprechenden Durchflußquerschnitt fließt also weiterhin, allerdings weniger viskoses Medium in den Arbeitsraum, wodurch die Lüfterdrehzahl auf einen annähernd konstanten Wert abfällt. Dabei bleibt die Wärmeentwicklung etwa konstant, und die Kupplung kann sich nicht überhitzen. Sobald die Temperatur im Inneren der Kupplung den Grenzwert der Schnappscheibe 41 wieder unterschritten hat, springt diese in ihre ursprüngliche, d.h. konkave Ausgangsstellung zurück. In dieser Stellung ist der Ventilhebel 8 nicht mehr vom inneren Bimetall 41 beeinflußt, sondern lediglich von dem äußeren Bimetall 10.

Fig. 5 zeigt eine Flüssigkeitsreibungskupplung 50, die als sogenannte drehmomentgeregelte Kupplung ausgebildet ist, d.h. sie weist kein äußeres Bimetall auf, welches einen Ventilhebel steuert, sondern regelt sich selbst bei erhöhter Belastung ab. Diese Kupplung 50 weist eine Arbeitskammer 54 auf, in welcher die Antriebsscheibe 55 drehbar angeordnet ist und in bekannter Weise das Drehmoment über beidseitig angeordnete Spalte mittels eines viskosen Mediums auf das Kupplungsgehäuse überträgt. Von der Arbeitskammer 54 durch eine Trennwand 56 abgeteilt ist eine Vorratskammer 53, die in nicht dargestellter Weise über eine Rücklauföffnung mit der Arbeitskammer 54 in Verbindung steht. An der Trennwand 56 ist ein Bimetall 51 mittels Nieten 59 befestigt, welches mit seinem freien Ende eine Ventilöffnung 57 in der Trennwand 56 überdeckt.

Das Bimetall 51 (ausgezogene Linien) liegt dabei auf einem Anschlag 52 auf, welcher an der Trennwand 56 befestigt und derart in seiner Höhe bemessen ist, daß der Ventilhebel 51 bei Aufliegen auf dem Anschlag 52 noch einen Resthub s1 freiläßt, durch welchen viskoses Medium von der Vorratskammer 53 in die Arbeitskammer 54 strömen kann. Die gestrichelte Darstellung zeigt das Bimetall 51' in seiner geöffneten Stellung, d.h. unterhalb der oben erwähnten Grenztemperatur (ca 150°C). In dieser Stellung 51' ist die Ventilöffnung 57 also vollständig geöffnet. Wenn sich die Temperatur im Inneren der Kupplung, d.h. im Bereich des Bimetalles 51' erhöht und die Grenztemperatur des Bimetalles erreicht, bewegt sich dieses kontinuierlich oder schlagartig (je nach Auslegung) in Schließrichtung, d.h. in Richtung auf den Anschlag 52. Im Unterschied zu den oben beschriebenen Ausführungen fehlt also hier in der Vorratskammer der durch das äußere Bimetall gesteuerte Ventilhebel - statt dessen wirkt hier das Bimetall 51 selbst als Ventilhebel. Somit ist es mittels dieses inneren Bimetalles 51 möglich, auch eine drehmomentgeregelte Kupplung vor Überhitzung zu schützen.

## Patentansprüche

1. Flüssigkeitsreibungskupplung, bestehend aus einem Kupplungsgehäuse (1), welches durch eine Trennwand (4) in eine Arbeitskammer (2) und eine Vorratskammer (3) unterteilt ist, wobei in der Arbeitskammer (2) drehbar eine mit einer Antriebswelle (6) verbundene Antriebsscheibe (5) angeordnet ist, wobei sich in der Trennwand (4) eine Ventilöffnung (7) befindet, die über einen Ventilhebel (8) kontrolliert wird, welcher über ein außerhalb des Kupplungsgehäuses (1) angeordnetes Bimetall (10) betätigt wird, und wobei in der Vorratskammer (3) ein weiteres, inneres Bimetall (11) zur Betätigung des Ventilhebels (8) in Schließrichtung angeordnet ist, dadurch gekennzeichnet, daß das innere Bimetall (11) im ölbenetzten Bereich der Vorratskammer angeordnet und mit einem Ende am Kupplungsgehäuse (1, 4) befestigt ist, daß innerhalb der Vorratskammer (3) ein Anschlag (12) zur Wegbegrenzung für das innere Bimetall (11) vorgesehen ist und daß das innere Bimetall (11) bei Erreichen einer bestimmten Grenztemperatur nur einen Teilhub s0 des Ventilhebels (8) bewirkt, der durch den Anschlag (12) bestimmt ist und einen freien Resthub s1 beläßt.

2. Flüssigkeitsreibungskupplung, bestehend aus einemKupplungsgehäuse (50), welches durch eine Trennwand (56) in eine Arbeitskammer (54) und eine Vorratskammer (53) unterteilt ist, wobei in der Arbeitskammer (54) drehbar eine mit einer Antriebswelle verbundene Antriebsscheibe (55) angeordnet ist, wobei sich in der Trennwand (56) eine Ventilöffnung (57) befindet, die über ein in der Vorratskammer (53) angeordnetes inneres Bimetall (51) kontrolliert wird, dadurch gekennzeichnet, daß das innere Bimetall (51) mit einem Ende an der Trennwand (56) oder am Deckel (58) befestigt ist, daß innerhalb der Vorratskammer (53) ein Anschlag (52) zur Wegbegrenzung für das innere Bimetall (51) vorgesehen ist und daß das innere Bimetall (51) bei Erreichen einer bestimmten Grenztemperatur nur einen Teilhub s0 bewirkt, der durch den Anschlag (12) bestimmt ist und einen freien Resthub s1 beläßt.

3. Flüssigkeitsreibungskupplung nach Anspruch 1 oder 2, dadurch gekennzeichnet, daß der Anschlag (12, 42, 52) an der Trennwand (4, 56) vorgesehen ist.

4. Flüssigkeitsreibungskupplung nach Anspruch 1 oder 2, dadurch gekennzeichnet, daß der Anschlag (22, 52) am freien Ende des Bimetalls (21, 51) in Form eines Winkels vorgesehen ist.

5. Flüssigkeitsreibungskupplung nach Anspruch 1, 2 oder 3, dadurch gekennzeichnet , daß der Anschlag (12, 42, 52) in Form einer Ausprägung aus der Trennwand (4, 56) ausgebildet ist.

6. Flüssigkeitsreibungskupplung nach Anspruch 1, 3 oder 5, dadurch gekennzeichnet, daß das innere Bimetall (11) als tellerförmige Schnappscheibe (41) ausgebildet ist, die mittels einer zentralen Auskröpfung (43), welche durch eine entsprechende Öffnung (8') durch den Ventilhebel (8) hindurchragt, mit der Trennwand (4) verbunden ist, und wobei mehrere Anschläge (42) als Ausprägungen aus der Trennwand (4) ausgebildet und innerhalb des Bereiches des äußeren Durchmessers der Schnappscheibe (41) angeordnet sind und entweder durch eine weitere Öffnung (8'') durch den Ventilhebel (8) hindurch oder infolge seitlicher Anordnung an diesem vorbeitreten.

7. Flüssigkeitsreibungskupplung nach Anspruch 6, dadurch gekennzeichnet, daß die Schnappscheibe (41) eine konkave Ausgangsform und eine konvexe Form nach Überschreiten der Grenztemperatur aufweist.

8. Flüssigkeitsreibungskupplung nach Anspruch 7, dadurch gekennzeichnet , daß die Schnappscheibe (41) mittels eines Niets (45) zentral mit der Trennwand (4) bzw. einer aus der Trennwand (4) ausgeprägten Auskröpfung (44) verbunden ist.

## Claims

1. Fluid friction clutch comprising a clutch housing (1) which is divided by a separating wall (4) into a working chamber (2) and a supply chamber (3), wherein a drive wheel (5) connected to a drive shaft (6) is arranged to rotate in the working chamber (2), wherein there is arranged in the separating wall (4) a valve opening (7) which is controlled by means of a valve lever (8) which is operated by means of a bimetal (10) arranged outside the clutch housing (1), and wherein a further, internal, bimetal (11) for operating the valve lever (8) in the closing direction is arranged in the supply chamber (3), characterised in that the internal bimetal (11) is arranged in the oil-wetted area of the supply chamber and is secured at one end to the clutch housing (1, 4), in that a stop (12) for limiting the displacement of the internal bimetal (11) is provided inside the supply chamber (3), and in that the internal bimetal (11), on reaching a specific limit temperature, brings about only a partial stroke s0 of the valve lever (8) which is determined by the stop (12) and leaves a free residual stroke s1.

2. Fluid friction clutch comprising a clutch housing (50) which is divided by a separating wall (56) into a working chamber (54) and a supply chamber (53), wherein a drive wheel (55) connected to a drive shaft is arranged to rotate in the working chamber (54), wherein there is arranged in the separating wall (56) a valve opening (57) which is controlled by means of an internal bimetal (51) arranged in the supply chamber (53), characterised in that the internal bimetal (51) is secured at one end to the separating wall (56) or to the cover (58), in that a stop (52) for limiting the displacement of the internal bimetal (51) is provided inside the supply chamber (53), and in that the internal bimetal (51), on reaching a specific limit temperature, brings about only a partial stroke s0 which is determined by the stop (52) and leaves a free residual stroke s1.

3. Fluid friction clutch according to Claim 1 or 2, characterised in that the stop (12, 42, 52) is provided on the separating wall (4, 56).

4. Fluid friction clutch according to Claim 1 or 2, characterised in that the stop (22, 52) is provided at the free end of the bimetal (21, 51) in the form of an angled member.

5. Fluid friction clutch according to Claim 1, 2 or 3, characterised in that the stop (12, 42, 52) is in the form of a stamped portion projecting from the separating wall (4, 56).

6. Fluid friction clutch according to Claim 1, 3 or 5, characterised in that the internal bimetal (11) is in the form of a plate-shaped snap disc (41) which is connected to the separating wall (4) by means of a central bent-out portion (43) which extends through a corresponding opening (8') through the valve lever (8), and wherein several stops (42) are formed as stamped portions projecting from the separating wall (4) and are arranged within the area of the outside diameter of the snap disc (41) and either extend through a further opening (8'') through the valve lever (8) or pass by it as a result of a lateral arrangement.

7. Fluid friction clutch according to Claim 6, characterised in that the snap disc (41) initially has a concave shape and has a convex shape after the limit temperature has been exceeded.

8. Fluid friction clutch according to Claim 7, characterised in that the snap disc (41) is connected by means of a rivet (45) centrally to the separating wall (4) or to a bent-out portion (44) stamped to project from the separating wall (4).

## Revendications

1. Embrayage à frottement visqueux, constitué par un carter d'embrayage (1), qui est subdivisé, par une paroi de séparation (4), en une chambre de travail (2) et une chambre de réserve (3), et dans lequel un disque d'entraînement (5) relié à un arbre d'entraînement (6) est disposé de manière à pouvoir tourner dans la chambre de travail (2), tandis que dans la paroi de séparation (4) est aménagée une ouverture de soupape (7), qui est contrôlée par l'intermédiaire d'un levier de soupape (8) qui est actionné par l'intermédiaire d'un élément bimétallique (10) disposé à l'extérieur du boîtier d'embrayage (1), alors que dans la chambre de réserve (3) est disposé un autre élément bimétallique intérieur (11) servant à actionner le levier de soupape (8) dans le sens de la fermeture, caractérisé en ce que l'élément bimétallique intérieur (11) est disposé dans la partie, mouillée par de l'huile, de la chambre de réserve et est fixé par une extrémité au carter d'embrayage (1,4), qu'une butée (12) servant à limiter le déplacement de l'élément métallique intérieur (11) est prévue à l'intérieur de la chambre de réserve (3) et que lorsqu'une température limite déterminée est atteinte, l'élément bimétallique intérieur (11) déclenche seulement une course partielle s0 du levier de soupape (8), qui est déterminée par la butée (12) et laisse subsister une course résiduelle libre s1.

2. Embrayage à frottement visqueux, constitué par un carter d'embrayage (50), qui est subdivisé, par une paroi de séparation (56), en une chambre de travail (54) et une chambre de réserve (53), un disque d'entraînement (55) relié à un arbre d'entraînement étant disposé, de manière à pouvoir tourner, dans la chambre de travail (54), tandis que dans la paroi de séparation (56) est située une ouverture 'de soupape (57), qui est contrôlée par l'intermédiaire d'un élément bimétallique inérieur (51) disposé dans la chambre de réserve (53), caractérisé en ce que l'élément bimétallique intérieur (51) est fixé par une extrémité à la paroi de séparation (56) ou au couvercle (58), qu'une butée (52) servant à limiter le déplacement pour l'élément bimétallique intérieur (51) est prévue à l'intérieur de la chambre de réserve (53) et que lorsqu'une température limite déterminée est atteinte, l'élément bimétallique intérieur (51) déclenche seulement une course partielle s0, qui est déterminée par la butée (52) et laisse subsister une course résiduelle libre s1.

3. Embrayage à frottement visqueux selon la revendication 1 ou 2, caractérisé en ce que la butée (12,42,52) est prévue sur la paroi de séparation (4,56).

4. Embrayage à frottement visqueux selon la revendication 1 ou 2, caractérisé en ce que la butée (22,52) est prévue sur l'extrémité libre de l'élément bimétallique (21,51), sous la forme d'une cornière.

5. Embrayage à frottement visqueux selon la revendication 1, 2 ou 3, caractérisé en ce que la butée (12,42,52) est agencée sous la forme d'une partie renflée ressortant de la paroi de séparation (4,56).

6. Embrayage à frottement visqueux selon la revendication 1, 3 ou 5, caractérisé en ce que l'élément bimétallique intérieur (11) est réalisé sous la forme d'un disque à déclic en forme d'assiette (41), qui est relié à la paroi de séparation (4) au moyen d'une partie renflée centrale (43), qui traverse une ouverture correspondante (8') aménagée dans le levier de soupape (8), plusieurs butées (42) étant agencées sous la forme de parties refoulées ressortant de la paroi de séparation (4) et étant disposées à l'intérieur de la zone correspondant au diamètre extérieur du disque à déclic (41) et traversant une autre ouverture (8") aménagée dans le levier de soupape (8) ou s'étendant à côté de ce levier, en raison d'un décalage latéral.

7. Embrayage à frottement visqueux selon la revendication 6, caractérisé en ce que le disque à déclic (42) possède une forme concave au départ et une forme convexe après dépassement de la température limite.

8. Embrayage à frottement visqueux selon la revendication 7, caractérisé en ce que le disque à déclic (41) est relié au moyen d'un rivet (45) en position centrée à la paroi de séparation (4) ou à une partie renflée (44) ressortant de la paroi de séparation (4).
